## Europäisches Patentamt

## European Patent Office

## Office européen des brevets

(11) Veröffentlichungsnummer: **0 318 662**
**A2**

(12) **EUROPÄISCHE PATENTANMELDUNG**

(21) Anmeldenummer: **88115936.2**

(22) Anmeldetag: **28.09.88**

(51) Int. Cl.⁴: **B60N 3/04**

(30) Priorität: **28.11.87 DE 8715792 U**

(43) Veröffentlichungstag der Anmeldung:
**07.06.89 Patentblatt 89/23**

(84) Benannte Vertragsstaaten:
**ES FR GB IT SE**

(71) Anmelder: **Pelzer, Helmut**
**Neue Strasse 5**
**D-5804 Herdecke-Ende(DE)**

(72) Erfinder: **Pelzer, Helmut**
**Neue Strasse 5**
**D-5804 Herdecke-Ende(DE)**

(74) Vertreter: **Schneider, Wilhelm, Dipl.-Phys.**
**Danziger Weg 9**
**D-3052 Bad Nenndorf(DE)**

(54) Schalldämmendes Auskleidungsteil für den Fussraum eines Kraftfahrzeuges.

(57) Schalldämmendes Auskleidungsteil für den Fuß-raum, insbesondere den vorderen Fußraum von Kraftfahrzeugen, bestehend aus einem der Kontur angepaßten Formteil und einem mattenartigen Teil aus einem Jute-Nade-Vlies bei dem das Formteil aus PUR-Schaummaterial besteht und der dem Formteil benachbarte Rand des Jute-Nadel-Vlieses in das PUR-Schaumteil eingeformt ist.

Fig. 1

EP 0 318 662 A2

## Schalldämmendes Auskleidungsteil für den Fußraum eines Kraftfahrzeuges

Die Erfindung betrifft ein schalldämmendes Auskleidungsteil für den Fußraum, insbesondere den Stirnwandbereich und den vorderen Fußraum, von Kraftfahrzeugen, bestehend aus einem der Kontur der Stirnwand angepaßten Formteil und einem mattenartigen Teil aus einem Jute-Nadel-Vlies, welches der Form des Fußraumes angepaßt ist.

Bisher besteht ein solches Auskleidungsteil aus zwei separaten Teilen, nämlich dem der Stirnwand angepaßten Formteil und dem im Fußraum angeordneten mattenartigen Teil. Das Formteil besteht aus einer oberseitig angeordneten Schwerschicht, die entsprechend der Formgebung des Formteiles verformt ist und die mit Schnittschaum oder auch mit Formschaum jeweils aus PUR (Polyurethan) hinterfüllt ist. An seinem der dem mattenartigen Teil benachbarten Randkante weist das Formteil eine Verkröpfung der Schwerschicht, die als Aufnahme für den Rand des mattenartigen Teiles aus Jute-Nadel-Vlies dient.

Diese Ausbildung ist insoweit nachteilig, als sich im Bereich der Stoßkante von Formteil und mattenartigem Teil aufgrund der herstellungsbedingten Toleranzen sowohl der Teile selbst als auch des entsprechenden Karosserieteiles des Kraftfahrzeuges eine Spaltbildung nicht vermeiden läßt. Diese Spaltbildung ist aber besonders nachteilig, da schon geringe Spalte ausreichen, um die gewünschte Schalldämm- und Schallabsorptionsfähigkeit des Gesamtgebildes erheblich herabzusetzen.

Ausgehend von diesem Stand der Technik liegt der Erfindung die Aufgabe zugrunde, ein sehr einfach handhabbares Auskleidungsteil für den Fußraum zu schaffen, mittels dessen eine bessere Schalldämmund Absorptionswirkung zu erzielen ist und welches eine hohe Paßgenauigkeit aufweist.

Zur Lösung dieser Aufgabe wird vorgeschlagen, daß das Formteil aus PUR-Schaummaterial besteht und der Rand des Jute-Nadel-Vlieses, der dem Formteil benachbart ist, in das PUR-Schaummaterial eingeformt ist.

Durch die einstückige Ausbildung von Formteil und mattenartigem Teil in Form des Jute-Nadel-Vlieses ist sichergestellt, daß eine Spaltbildung im Bereich des Überganges zwischen den beiden Teilen ausgeschlossen ist. Hierdurch sind auch herstellungsbedingte Toleranzen des nun einstückigen Auskleidungsteiles in ihren negativen Wirkungen weitestgehend gemindert.

Zur Verbesserung der Schalldämm- und/oder Schallabsorptionswirkung wird vorgeschlagen, daß das PUR-Schaummaterial mit Füllstoffen gefüllt ist, welche das spezifische Gewicht des Formteiles vergrößern.

Die Anreicherung mit Füllstoffen kann dabei partiell in ausgewählten Bereichen oder im Gesamtbereich des Formteiles aus PUR-Schaummaterial erfolgen.

Als besonders vorteilhaft wird angesehen, daß das PUR-Schaummaterial das Jute-Nadel-Vlies an der Randkante beidseitig umfaßt.

Eine bevorzugte Weiterbildung wird darin gesehen, daß in das Formteil eine Fußstütze eingeformt ist.

Dabei ist vorteilhaft, wenn die Fußstütze aus miteinander mechanisch verbundenen Schaumflokken aus PUR-Material besteht.

Desweiteren ist bevorzugt vorgesehen, daß die Fußstütze als rechteckige, im Querschnitt keilförmige Platte ausgebildet ist, die unterseitig und randseitig vom PUR-Schaummaterial des Formteiles umgeben ist.

Ein Ausführungsbeispiel der Erfindung ist in der Zeichnung dargestellt und im folgenden näher beschrieben.
Es zeigt:

Fig. 1 ein erfindungsgemäß ausgebildetes Auskleidungsteil in Ansicht;

Fig. 2 desgleichen im Schnitt II-II der Figur 1 gesehen.

Das Auskleidungsteil für den Stirnwandbereich und den vorderen Fußraum eines Kraftfahrzeuges besteht im wesentlichen aus einem der Kontur der Stirnwand angepaßten Formteil 1 und einem mattenartigen Teil aus einem Jute-Nadel-Vlies, welches der Form des Fußraumes angepaßt ist. Die Zeichnungsfigur 1 ist perspektivisch angelegt, wobei zwischen den Teilen 1 und 2 eine entsprechende Winkelstellung besteht, die der Winkelstellung der Stirnwand und des Bodenbleches des Kraftfahrzeuges entspricht. Das Formteil 1 weist Ausnehmungen für den Durchgriff von Funktionsteilen auf und ist seitlich mit Ausformungen zur Verkleidung der Radkästen des Fahrzeuges versehen.

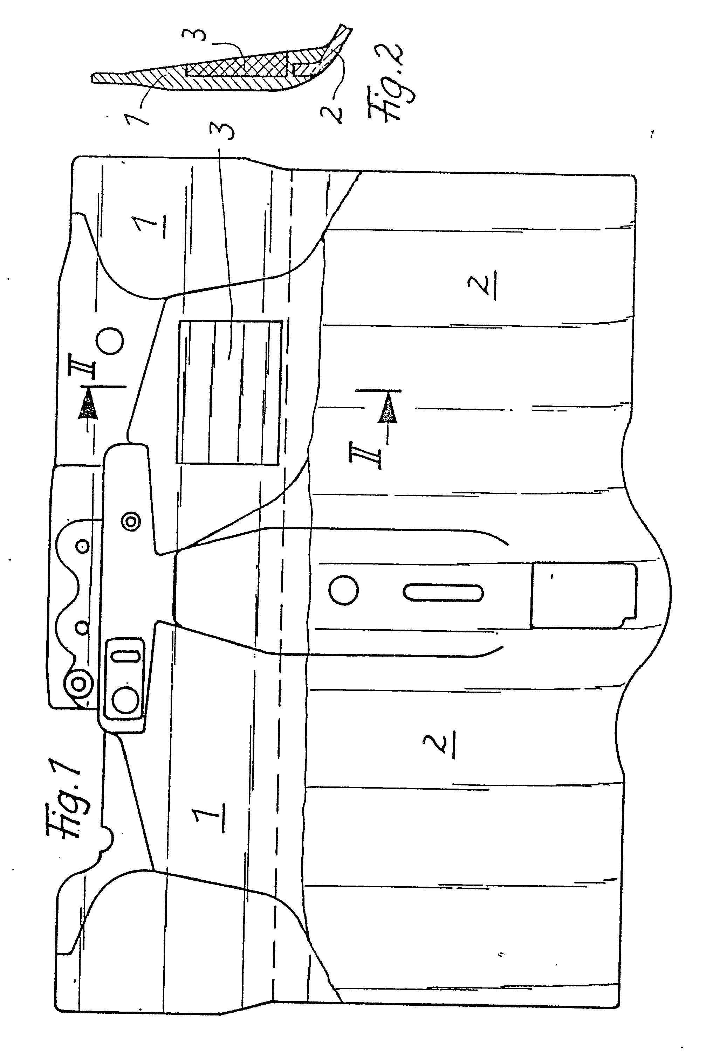

Das Formteil 1 besteht aus gefülltem PUR-Schaummaterial, wobei der Rand des Jute-Nadel-Vlieses 2, der dem Formteil 1 benachbart ist, in das PUR-Schaummaterial eingeformt ist, wie dies insbesondere aus Figur 2 deutlich ersichtlich ist. Dabei umfaßt das PUR-Schaummaterial das Jute-Nadel-Vlies 2 and seiner Randkante beidseitig. Zusätzlich ist in das Formteil 1 eine Fußstütze 3 eingeformt, die im wesentlichen aus Schaumflokken, vorzugsweise aus PUR-Schaummaterial besteht. Die Fußstütze ist im Ausführungsbeispiel als rechteckige Platte ausgebildet, die unterseitig und randseitig vom PUR-Schaummaterial des Formteiles 1 umgeben ist. Die Fußplatte kann keilförmig ausgebildet sein, um einen weicheren Übergang von der Auftrittsfläche des mattenartigen Teiles 2 zum Stirnwandbereich, in welchem das Formteil 1 angeordnet ist, zu erreichen.

Die Erfindung ist nicht auf das Ausführungsbeispiel beschränkt, sondern im Rahmen der Offenbarung vielfach variabel.

Alle neuen, in der Beschreibung und/oder Zeichnung offenbarten Einzel- und Kombinationsmerkmale werden als erfindungswesentlich angesehen.

**Ansprüche**

1. Schalldämmendes Auskleidungsteil für den Fußraum, insbesondere den Stirnwandbereich und den vorderen Fußraum, von Kraftfahrzeugen, bestehend aus einem der Kontur der Stirnwand angepaßten Formteil und einem mattenartigen Teil aus einem Jute-Nadel-Vlies, welches der Form des Fußraumes angepaßt ist, dadurch gekennzeichnet, daß das Formteil (1) aus PUR-Schaummaterial besteht und der Rand des Jute-Nadel-Vlieses (2), der dem Formteil (1) benachbart ist, in das PUR-Schaummaterial eingeformt ist.

2. Schalldämmendes Auskleidungsteil nach Anspruch 1, dadurch gekennzeichnet, daß das PUR-Schaummaterial mit Füllstoffen gefüllt ist, welche das spezifische Gewicht des Formteiles (1) vergrößern.

3. Schalldämmendes Auskleidungsteil nach Anspruch 1 oder 2, dadurch gekennzeichnet, daß das PUR-Schaummaterial das Jute-Nadel-Vlies (2) an der Randkante beidseitig umfaßt.

4. Schalldämmendes Auskleidungsteil nach einem der Ansprüche 1 bis 3, dadurch gekennzeichnet, daß in das Formteil (1) eine Fußstütze (3) eingeformt ist.

5. Schalldämmendes Auskleidungsteil nach einem der Ansprüche 1 bis 4, dadurch gekennzeichnet, daß die Fußstütze (3) aus miteinander mechanisch verbundenen Schaumflocken aus PUR-Material besteht.

6. Schalldämmendes Auskleidungsteil nach Anspruch 4 oder 5, dadurch gekennzeichnet, daß die Fußstütze (3) als rechteckige, im Querschnitt keilförmige Platte ausgebildet ist, die unterseitig und randseitig vom PUR-Schaummaterial des Formteiles (1) umgeben ist.

Fig.1

Fig.2